Europäisches Patentamt

(19) European Patent Office

Office européen des brevets

(11) Publication number: **0 309 298**
**A2**

# EUROPEAN PATENT APPLICATION

(21) Application number: 88308918.7

(22) Date of filing: 26.09.88

(51) Int. Cl.4: **G 11 B 27/02**
**G 11 B 5/86, G 11 B 27/00,**
**G 11 B 23/40, G 07 F 17/30,**
**G 11 B 20/00**

(30) Priority: 25.09.87 CA 547854   01.02.88 US 150760

(43) Date of publication of application:
**29.03.89   Bulletin   89/13**

(84) Designated Contracting States:
**AT BE CH DE ES FR GB GR IT LI LU NL SE**

(71) Applicant: **Ball, Grant**
**509-825 Granville Street**
**Vancouver British Columbia V6Z 1K9 (CA)**

**Lakhani, Karim**
**509-825 Granville Street**
**Vancouver British Columbia V6Z 1K9 (CA)**

**Lakhani, Abdul**
**509-825 Granville Street**
**Vancouver British Columbia V6Z 1K9 (CA)**

(72) Inventor: **Ball, Grant**
**509-825 Granville Street**
**Vancouver British Columbia V6Z 1K9 (CA)**

**Lakhani, Karim**
**509-825 Granville Street**
**Vancouver British Columbia V6Z 1K9 (CA)**

**Lakhani, Abdul**
**509-825 Granville Street**
**Vancouver British Columbia V6Z 1K9 (CA)**

(74) Representative: **Rees, David Christopher et al**
**Kilburn & Strode 30 John Street**
**London WC1N 2DD (GB)**

(54) Recording selection, high speed and high quality duplication, and royalty payment apparatus and method.

(57) This invention provides a system that allows a customer to select various randomly accessible musical pieces to be copied at a rapid speed onto a tape for his immediate purchase, and that automatically forwards the appropriate royalty payments to the credit of the artists involved. In a preferred embodiment, the available selections are stored and edited on a video tape by means of an audio to video digital converter, are transferred to video disk to form a library, and are retrieved for duplication onto cassette tape by means of a video to audio digital converter. A much higher than normal speed of duplication is maintained with minimal wow and flutter by means of a burst mode input and a rate buffer to output. A synchronized stereo signal is retrieved from each frame of video format, without the expected phase shift problems. An enhanced dynamic range is also provided by an increased number of bits of information being used for each sampling of the original analog signal. Details of each use of the apparatus are coded onto the medium receiving the copied selections.

FIGURE 1

EP 0 309 298 A2

**Description**

# RECORDING SELECTION, HIGH SPEED AND HIGH QUALITY DUPLICATION, AND ROYALTY PAYMENT APPARATUS AND METHOD

FIELD OF THE INVENTION

The present invention relates to commercial and consumer recording. In particular the invention discloses a new system that allows a customer to select various randomly accessible musical pieces to be copied at a rapid speed onto a tape for his immediate purchase, and that automatically records or forwards the appropriate royalty payments to the credit of the artists involved.

DESCRIPTION OF THE PRIOR TECHNOLOGY

In the recording industry it is common for record and tape manufacturers and distributors to decide upon a selection of musical pieces to put onto a record or a tape for eventual sale to the consumer, and to make arrangements for royalty payments to the composers, lyricists and performers. There exists a great variety of commercial audio and video equipment that allow selection and duplication pieces.

Even at the consumer level, a combination of record player and tape recorder or of multiple tape recorders allows easy selection and duplication of a sequence of musical pieces onto a recording tape. This type of copying is often an infringement of copyright owned by the composers, lyricists, and performers of the music, however.

A variety of juke boxes have been made to enable the consumer to select a sequence of recorded musical performance for immediate play. An analogous apparatus for duplication of the musical selections onto another medium is disclosed in U.S. Patent 3,990,710. The apparatus is coin-operated and permits the duplication of phonograph recordings onto magnetic tapes, with a label printing means and acknowledgement of royalty reporting. In U.S. Patent 4,141,045, a system is disclosed that enables the recording onto an audio tape of a customized multiple selection of taped music from a number of magnetic tape cartridges. In U.S. Patent 4,227,220, a tape recording system is provided that allows the selection of prerecorded materials from a bank of such material and the re-recording of the selected materials onto tape. U.S. Patent 4,597,058 discloses a system in which a host computer controls a number of terminals, at which a consumer can select programs from a library to be copied onto a cartridge. The system keeps an accounting of copies made in order to allow proper royalty payments to be made. U.S. Patent 4,073,465 discloses a method and apparatus for choosing a group of musical pieces from a library of disks and for recording the chosen pieces onto a cassette tape at a higher than normal playing speed. That invention uses a first and a second laser disk means, the first reading audio information in a forward direction, the second in a reverse direction, feeding the information to processor means and recording means such that the forward and reverse tracks of the audio cassette are recorded in one pass of the tape. The apparatus is an independent unit, with keyboard input from the user, and an audio-visual display of the music in its library. U.S. Patent 4,414,467 shows a video cassette vending machine having a preview feature.

U.S. Patent 4,355,338 shows a duplicating means by which an analog signal can be read in part from one disc and in part from another disc and stored into memory, the digital representations then being read out at a high speed and converted to a reconstructed analog signal for recording. U.S. Patent 4,429,332 discloses a method of converting audio analog signals to digital form for storing on a video tape, and of reconversion to audio analog form the output of the audio information. This patent was assigned to EECO Incorporated. This kind of audio encoding onto and decoding from video disk is known as "Still Frame Audio". SONY has also implemented this kind of system. SONY's implementation has digitally encoded 2.5 seconds of low quality audio (bandwidth 20Hz-3700Hz) into each video frame. In EECO's implementation only one (mono) audio channel is encoded into video format and the audio channel is played back at the original audio frequency.

None of the prior technology discloses the arrangement of features that comprise the apparatus and the method of the present invention.

SUMMARY OF THE PRESENT INVENTION

A customer will be able enter a store that is equipped with a preferred embodiment of this invention, specify a number of randomly accessible musical segments to fill a sixty-minute cassette tape in his preferred order of play, and receive, in less than two minutes, a high quality reproduction of his selections on tape, appropriately labelled. The individual would pay a reasonable fee for this customized product. All royalty payment requirements would be automatically calculated and processed by a computer.

This automated and rapid process is implemented by using the computer to coordinate the processing of the various tasks involved, by using video tapes, video disks, live computer memory, or other randomly accessible media to store the audio information, and by using a number of special encoding and decoding circuits and processes. In the currently preferred embodiment, high quality stereo audio is encoded into video frames and then stored on video disks as video information. A decoder would later take the audio encoded video information from the video disk and play it back as high speed high quality stereo audio information for duplication onto a cassette tape.

The innovations of this invention are comprised of the following:

1. Royalty and copyright handling

The calculation and making of the appropriate royalty payments for the copying by the apparatus is of critical importance to the acceptance of this kind of invention by the music and recording industry.

This invention not only keeps a record of its copying for purposes of auditing and payment of royalties by the owner or licensee of the machine, but also provides a number of features designed to assist in the prevention of illegal copying from the tapes dispensed by the machine.

Information relevant to the payment of royalties would be encoded onto video frames of coded audio information. For example, the title of piece, the name of the composer, the lyricist, the recording company, related copyright information, and directives as to royalty would be encoded on video frames along with a section of the audio information itself.

The royalty information together with information identifying the machine, date, time, and possibly the customer would be encoded periodically onto the dispensed tape. This encoded blip of information would be negligible for listening purposes, being beyond the audible range, but could be decoded by a complementary circuit for tracking unauthorized copying that had been done from the dispensed tape, or for verifying the origin of the tape at a later date.

A notice of this procedure would discourage subsequent unauthorized copying from the dispensed tapes.

The royalty information and the above-noted identifying information would also be printed onto a label and affixed to the cassette prior to its being dispensed from the machine.

A duplicate hard copy of all this information relating to the transaction would be printed and retained by the machine in order to provide an accounting back-up in case of electronic failure of the system.

A self-diagnostics routine and circuitry would confirm periodically and automatically that the machine's functions were operating properly and would not allow any further copying in the event of a breakdown of any of the features relating to the royalties, or to the high quality of the audio recording.

A related routine and circuitry would continually monitor the security of the machine, and would shut it down and activate an alarm if the machine were damaged or moved other than as provided for authorized installers and operators of the machine.

The machine could be provided with a credit card reader, and with debit card reader/writer. allowing on-line credit/debit card verification. The payment by credit or debit card would automatically provide customer identification to be processed, encoded and printed as described above. The machine could be configured to require a credit card or a debit card for this purpose. Alternatively, the machine could be made to accept coins or bills, with the customer merely being asked to input identification into the machine for purposes of identifying the ownership of the dispensed tape.

The cassette duplicator has a mechanical stop that does not allow normal commercial size audio cassettes to be inserted into the duplicator. Only custom audio casettes that have a notch nut into them can be inserted into the cassette duplicator. Another security feature of the system.

2. High quality audio

The analog audio signals are converted to digital information in order to allow the compression and encoding of the signals in video format. The video format allows a large amount of information to be stored on a single piece of medium, and allows a high speed of location and retrieval of the desired selections of the information from a video disk.

The encoded information stored in this manner is randomly accessible, which means that songs can be relayed to the recording means in any order and with no slowing of the speed of duplication.

In a preferred embodiment, the high quality audio storage and re-recording capability of the system is achieved notwithstanding the conversion to digital information by using 14 bits of digital information for each of the sampling's of the analog signal. Previous known conversion means generally used only 8 bits for each sampling. The 14-bit samples are then compressed into 8-bit format using a non-linear coding technique. This non-linear coding technique takes advantage of the human ear's log scale bases response to audio. Using this technique there is no noticeable loss in the audio quality. The non-linear coding allows the increase of the dynamic range of the sound from 48 db to 84 db, achieving Hi-Fi quality sound rather than AM-radio quality. The use of 14 bits of sampled information permits the greater dynamic range, while the compression into 8 bits allows the use of 8-bit integrated circuitry rather than 16-bit circuitry for the intermediate processing of the data. This enables a substantial equipment cost saving and data storage saving over not compressing the data and using 16-bit circuitry throughout.

3. High speed duplication

The audio information stored in video format is randomly accessible, which means that songs can be relayed to the recording means in any order and with essentially no slowing of the speed of duplication by the retrieval method.

In SONY's and EECO's implementation of Still Frame Video the play-back is only at normal audio speed. In a preferred configuration of the apparatus of this invention, the encoding and decoding of the information allows the re-recording speed to be set by the operator to 1, 8, or N times normal audio play-back speed, up to the limits explained below.

Sixteen times normal play-back speed is a convenient speed because there are already commercially available tape recorders that can record that fast. By stepping up the motor speed of such a tape recorder and using video quality recording heads, that is, recording heads with a high dynamic and high frequency, a recording speed of 64 times the normal playback speed could be achieved, with the limiting factor being then the tensile strength of the audio cassette tape. If a stronger than normal tape were used, a recording speed of 120 times normal play speed could be achieved, with the present encoding and decoding processes being then the limiting factor on the recording speed.

At a recording speed of 16 times normal, the buffering of digital information has to be done to allow the high speed of retrieval (for example 120 times normal audio) to match up with the slow speed capabilities of the audio recording equipment (for example 16 times normal audio).

A constant ouptut speed on the digital-to-analog conversion process is achieved by using a rate buffer before the digital-to-analog (D/A) converter. The input to the rate buffer is done at high speed in burst mode. Output of the rate buffer is done in constant speed controlled by a crystal oscillator to avoid having much wow and flutter in the output audio signal. The inventors call this process "High Speed Copying to Audio Cassette from Video Disk".

A calculation by the computer of the amount of cassette tape storage for the selected pieces will allow a decision to be made about what selections need to be put on the reverse direction tracks of the tape.

At relatively low recording speeds, for example, at 16 times normal play-back speed, the conversion process has plenty of time to read into buffers the forward and reverse track sequences. The digital information from the buffers is then simultaneously fed to the corresponding forward and reverse stereo recording heads to record the tape in one pass. This gives a recording speed of 32 times normal as the forward and reverse tracks are recorded simultaneously.

4. High Speed Stereo Duplication

In addition, the preferred configuration would have two audio channels stored on a single frame of video format. The two audio channels would be accessed and played simultaneously. This provides a stereo capability lacking in the previously known implementations.

This feature is not simply a matter of doubling the equipment in order to read and write two channels from each source. Phase shift problems arise unless the information from each of the channels is correctly synchronized. The conversion circuitry correctly encodes and decodes two synchronized channels, providing for stereo sound on the dispensed tape.

5. Production of Library

A preferred method of producing the library of selections for this system is to first transfer the various musical pieces onto video tape. At that stage the library can still be readily edited. After a tape is complete, the information can be stored onto video disk. It is not currently feasible with readily available equipment to edit a video disk, but it is an excellent medium for read-only random access applications.

In the preferred implementation, 4 seconds of two channels of high quality audio (bandwidth 20Hz-10000Hz) would be encoded into each video frame. Another suggested implementation would have 2.5 seconds of two synchronized channels ultra high quality audio (bandwidth 20Hz - 15000Hz) encoded into each video frame.

A Constant Angular Velocity (CAV) video disk has 54,000 randomly accessible video frames. At 4 seconds of two channels of high quality audio per video frame there would be 60 hours (4 x 54,000 = 216,000 seconds) of audio stored on a single video disk. At 2.5 second of two channels of ultra high quality audio per video frame there would be 37.5 hours (2.5 x 54,00 = 135,000 seconds) of audio stored on a single video disk. The system would be set up by storing a library of music on video disks.

6. Customer Interface

The apparatus would preferably present interactive operating instructions and information to the customer via a computer monitor equipped with touch-screen input means by which the user can make his selections from a nested series of menus. Alternatively a keyboard or other input means could be used for input from the customer.

The entire apparatus can be contained in a counter or in a stand the size of an arcade-style video game, and could be located in a store, mall, booth, or vehicle.

7. System Integration

A typical embodiment would have the following major components: a computer, a video tape recorder, a video disk player, special analog to digital converters, special digital to analog converters, a high-speed high-fidelity stereo audio tape recorder, royalty coding and accounting means and digital input and output interfaces between the computer and the above-noted components. The computer governs the initial or periodic audio to video conversion for theformation or revision of the library of music, the user-friendly interface, the video to audio conversion for individual customers, the duplication, the royalty-related coding and the accounting for forwarding of royalty fees.

8. Optional Features

The computer would also be able to handle a communications link for automatic forwarding of the royalty fees involved in the operation of the apparatus. Further communications enhancements to the system would enable customers to dial into the system with a telephone, make their selections, and have the tape sent to them, or have their own sub-system to receive the selections for copying onto tape.

An alternative set-up for the system would be to have the library maintained at a central location, with cable, telephone, or radio link to remote terminals where the customers can have access to the system, and where the tapes can be copied and dispensed.

The computer would be able to handle not only the accounting for royalty payments but also any music library or inventory control or other accounting tasks, such as order entry, invoicing, billing, customer information, customer mailing lists, or sales journal, required by the operation of the apparatus in the store or other commercial facility in which the apparatus is located. The computer could, of course, also be made to handle the general accounting requirements of the business in addition to those necessitated by the operation of the apparatus.

It will be apparent that the apparatus and method of this invention can be applied to the sequencing and duplication of not only musical pieces, but also any audio or visual copyright or public domain material.

The output from the system would be stored on audio cassettes in the currently preferred embodiment, but it could alternatively be stored on reel tape, video tape, floppy disks, magnetic disks, optical erasable disks, Write Once Read Many (WORM) disks, digital audio tape, or any other mass data storage media.

Similarly the library of available selections could be stored on any suitable mass data storage media, preferably having random access and high-speed retrieval capabilities, such as optical disks, CD-ROM, CD's WORM disks, or magnetic disks, digital laser disks and digital audio tapes with the appropriate changes in the format of the stored information, in the interface circuits, and in the software. A typical video disk can hold approximately 15 gigabytes of information, recorded on one side and even larger libraries can be made available in the system by recording on both sides of the disk or by having electronically controlled mechanical means of changing the units of storage medium in the retrieval means.

DESCRIPTION OF THE DRAWINGS

Figure 1 is a schematic diagram showing a configuration for creating video tape storage for the system.
Figure 2 is a schematic diagram showing a configuration for high speed recording of audio cassette tapes from a video disk player.
Figure 3 is a schematic diagram showing a configuration of the invention suitable for use in a record store.
Figure 4 is a perspective of an embodiment of the invention, set up for use by customers in a retail store.
Figure 5 is a block diagram showing the two channels audio to video converter.
Figure 6 is a block diagram showing the video to two stereo channels audio converter.

BACKGROUND INFORMATION

Video frame grabbers that digitize standard analog video signals such as NTSC (Standard in North America), CCIR, RS- 170, RS-330, or PAL (Standard in Europe) in real-time have been with us for a few years. Video frame grabbers digitize the analog video images and store the digital image in digital memory banks. The video frame grabbers not only digitize the video images but also play out the image stored in digital memory into standard video format in real-time. Video frame grabbers only digitize and store the image parts of the video signal. The vertical and horizontal sync signals contain no image data and are not digitized and stored in the memory banks. The sync information is pre-determined for any standard video format and can easily be generated for any standard video format. When the digital memory containing the video image is played out in standard video format the sync information is generated on board the video frame grabber and added to the image information to give a standard composite video signal.

The memory banks on frame grabbers come in various sizes and some of them are completely programmable. The more standard video memory banks sizes for NTSC format are 512 x 512 x 8 bits, 1024 x 512 x 8 bits, 640 x 512 x 8 bit and 512 x 512 x 10 bits. The NTSC video standard can be taken as a suitable example of a standard video format.

The NTSC standard utilizes 525 lines per frame and plays out the frames at 30 frames per second. Each frame is composed of two fields of half as many lines as a complete frame. The odd lines make up one field and the even lines make up the second field. Each field is played out in 1/60th of a second. The vertical blanking interval occupies 22 lines of the 525 lines in a frame.

The analog bandwidth of the video signal is approximately 4.5 megahertz (MHz). Since the vertical blanking interval occupies 22 lines this period can not be used to encode analog information into. Each horizontal line period is 63.49 microseconds but only 52.26 microseconds of the line contains image information. This two factors combined reduce the effective usable analog bandwidth (UBW) of the video signal to 3.5 MHz.

$$UBW = \frac{(525 - 22) \text{ lines} * 52.25 \text{ microsec.} * 4.5 \text{ MHz}}{525 \text{ lines} * 63.49 \text{ microsec.}}$$

## DETAILED DESCRIPTION

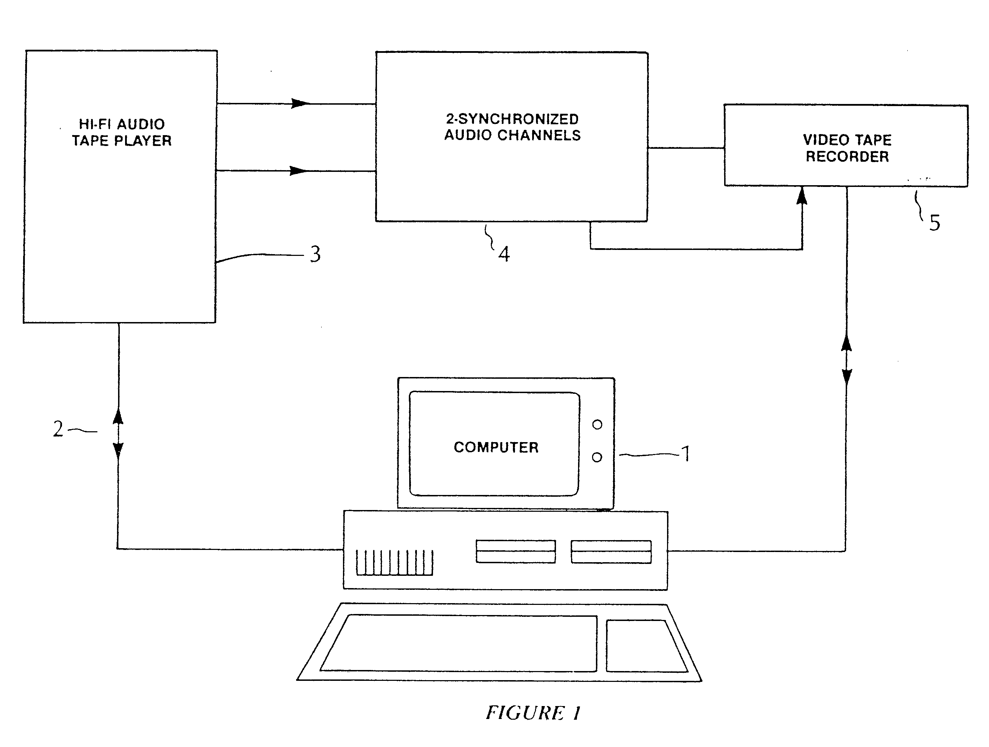

Referring to Figure 1, an IBM PC or AT computer 1 sends digital output to an interface 2 controlling a high fidelity audio tape player 3. The tape player sends its audio signals to an analog 2-synchronized-channel audio to video converter 4. The converter generates a frame store signal at the appropriate time, activating the frame by frame store capability of the video tape recorder 5. The storage by the video tape recorder 5 is also controlled by the computer 1. For example, it would see that all songs start on a new video frame, and would encode each of the frames as to what type of encoding has been used, the frame number, the song number, song royalty fees, length of song recorded on this frame, how many horizontal lines in the frame contain real data, and possibly other relevant information. This information is stored in the unused horizontal scan lines. On the frame grabber each video frame consists of 512 x 512 x 8 bits of information. Only 480 of the 512 lines are encoded in the currently preferred embodiment, leaving room for later addition of digital data, gain and offset coding. Using 480 lines, there would be 245,760 (512 x 480) x 8 bits of usable sample space per frame. The left audio channel is stored on even frame memory horizontal scan lines and the right channel is stored on odd frame memory horizontal scan lines. Whether the video disk has error correction code or not can be kept track of by the computer scanning the encoding type used on the disk. The encoding type would be used to determine the decoding method used. The first few frames of the Video Tape would contain the index of what is on the complete disk (i.e., song names, song numbers, song starting and ending frame numbers). Once the video tape is ready it could be sent to a video disk manufacturer to transfer the information on the video tape to video disk. This step is a standard commercial procedure that is available from various manufacturers.

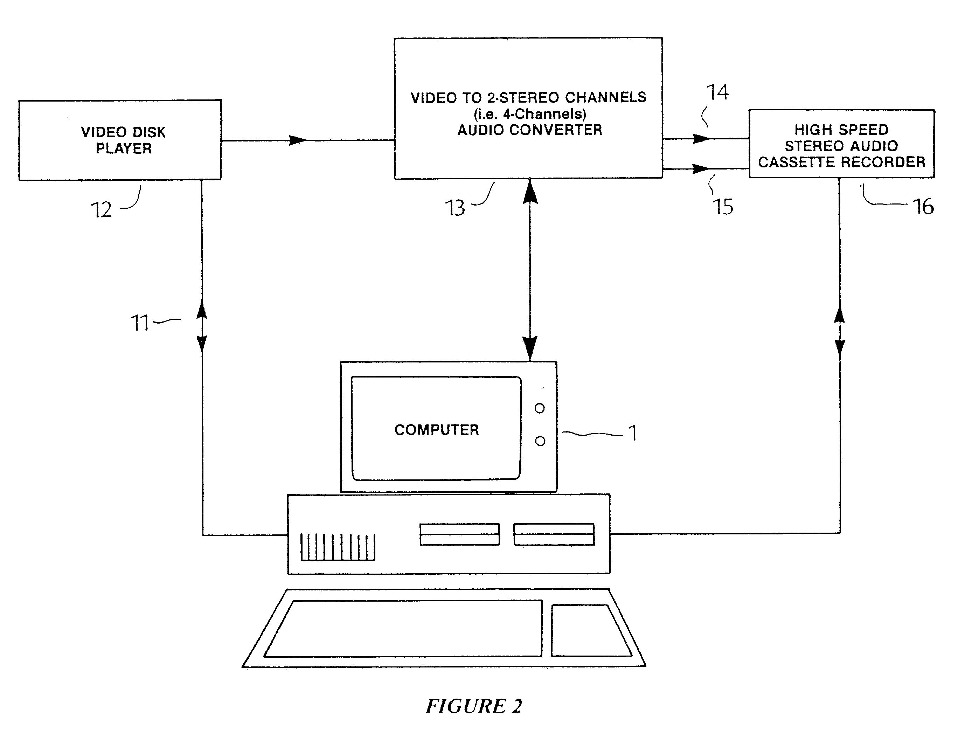

Referring to Figure 2, an IBM PC or AT computer 1 sends digital output to an RS-232 or an IEEE 488 interface 11 controlling a video disk player 12. The video disk player sends a standard National Television Standard Committee (NTSC) or other format (such as RS-170, RS-330, CCIR, PAL, or high-fidelity TV) to a video to 2-stereo-channels audio converter video signal 13, which in turn sends its audio signals on forward stereo left channel wiring 14 and reverse stereo right channel wiring 15 to a high speed audio cassette recorder 16, operating, for example, at 16 times normal audio speed. The converter 13 and the cassette recorder 16 are each also directly controlled with digital signals from the computer 1.

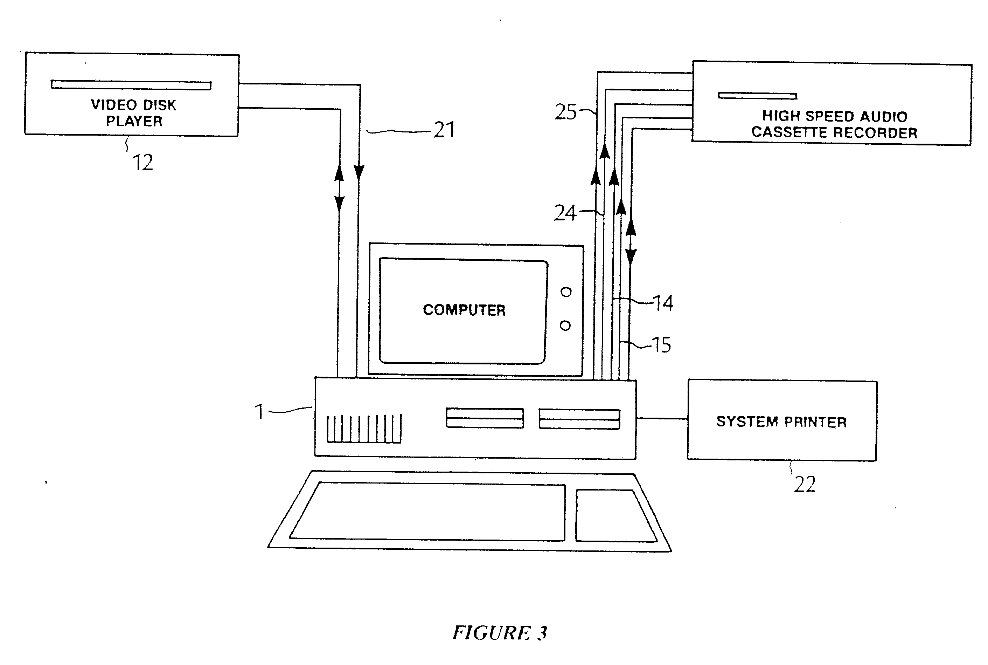

Referring to Figure 3, the computer 1 commands the Video Disk player 12 via the RS-232 or the IEEE 488 interface to play the video frame containing the audio information to be recorded. The video disk player 12 is also commanded to freeze the video frame until commanded again.

The next step would be to digitize the video signal from the video disk player 12, using a frame grabber 21, into frame memories. The frame memories are then read out through rate buffers interfaced to look-up tables that decompress the digital signal and outputted into analog form by high speed digital to analog converters.

The video frame output from the video disk player can be digitized at 30 times per second by the frame grabber. At an audio sampling frequency of 30KHz per channel there are 4 seconds of audio on each video frame. Therefore, there is ample time for the IBM-PC/AT to command the video disk player to randomly seek to the new frames before the last frames of data has been transferred out via custom high speed digital to analog (D/A) converters. If audio sampling frequency is 48KHz per channel then each frame would hold 2.5 seconds of audio information. The IBM-PC/AT would have to command the video disk player to move to new frames every 2.5 seconds rather than every 4 seconds when operating at one times normal audio speeds. At 16X normal and an encoding of 4 seconds of audio per frame, the IBM-PC/AT would have to command the video disk player to move to the next frame every 250 milliseconds.

At 32X normal audio and an encoding of 4 seconds of audio per frame, the IBM-PC/AT would have to command the video disk player to move to the next frame every 125 milliseconds. The IBM-PC/AT is fast enough to control the operation of the system and monitor any other activities that may be required. The frame's even horizontal lines contain the left audio channel information and the odd horizontal lines would contain the right audio channel information. The forward audio track's left audio channel would be sent to the cassette recorded via wiring 14 and the right audio channel via wiring 15. The reverse audio track's left audio

EP 0 309 298 A2

channel would be sent to the cassette recorder via wring 24 and the right audio channel via wiring 25.

The IBM-PC/AT could control the high speed cassette recorder via digital I/O ports. These steps are performed in parallel and repeated until the duplication of the music onto the cassette tape is complete. A printer 22 may provide hard-copy of information used in the corollary accounting, labelling, and packaging functions of the system.

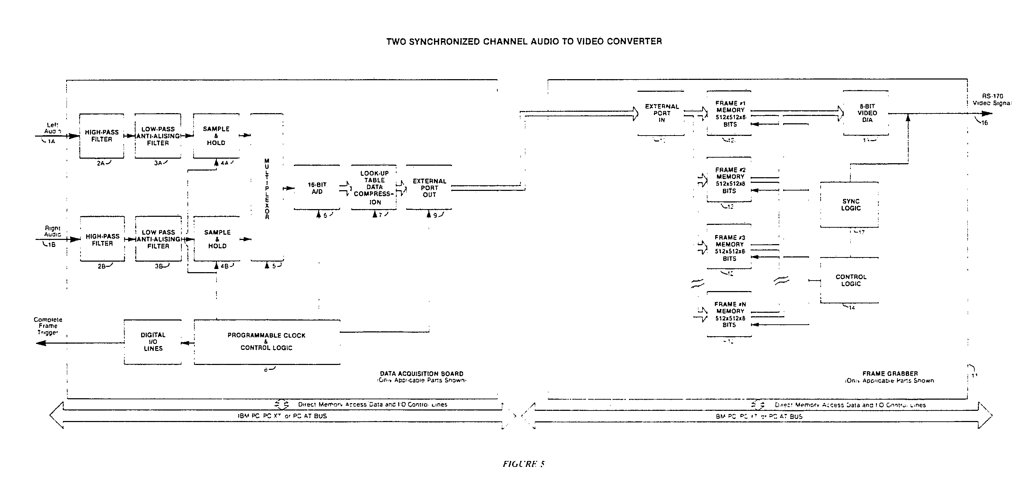

Referring to Figure 5, the left audio signal 1A and the right audio signal 1B are passed through high-pass filters 2A and 2B. This removes the DC signal level and reduces unwanted low frequency electrical noise from the audio signals. Outputs of the high-pass filters are connected to low-pass anti-aliasing filters 3A and 3B. Low-pass anti-aliasing filters reduce high frequency signals components, unwanted electrical interference noise, or electronic noise from the signals. The outputs of the low-pass anti-aliasing filters are connected to sample and hold circuits 4A and 4B. The two analog signals are simultaneously sampled and their values are held until the analog-to-digital (A/D) converter 6 has converted their values to digital form. The outputs of the sample and hold circuits are sequentially switched through the analog multiplexor to the analog-to-digital converter 6. The resultant digital value from the analog-to-digital converter goes to the computer bus and also to the look-up table 7.

Thus the analog multiplexor, together with the sample-hold circuits, time share the A/D converter between the two analog input channels. The timing and control of the complete data-acquisition system is done by the programmable clock and control logic 8, which in turn is under the control of the computer. The low-pass filter and the digital sampling rate determine the high frequency limit of the audio signal. The minimum digital sampling rate has to be twice the highest frequency contained in the audio signal. The higher the sampling rate the better the quality of sound that is digitized and reproducible.

The look-up table compressed the 16-bit digital value to an 8-bit digital value via a proprietary non-linear compression formula. The output of the look-up table is fed into external output port 8. The output of the external port is interfaced to an external input port 10 on the frame grabber board 11. The transfer of data between the data-acquisition board and the frame grabber board is completely independent of the processor bus. The transfer between the two board is done asynchronously and is at much higher speed than is possible via the processor bus.

The output from external input port is fed into anyone of the frame grabber's frame memories 12.

Alternatively, the digital values from the A/D converter can be read by the processor, compressed via the same algorithm as the look-up table, and stored in the frame grabber's on board frame memory 12. This is possible since both the data-acquisition and the frame grabber boards are directly memory mapped into the processors memory space. The processor could also digitally filter the digital values before storing them into the frame grabber's memory.

Any one of the frame memories can be read and outputted via the video digital-to-analog (D/A) converter 13 at 30 times a second. The sync pulses for the video signal are generated by sync logic 17. The combination of the D/A output and the sync logic output gives a standard video signal 16.

The timing and sequencing of events on the frame grabber board is controlled by the control logic circuit 14, which in turn is under the control of the computer. Once a complete frame has been encoded with the two synchronized audio channels information, the computer commands the frame grabber to output the correct frame via its D/A converter in standard video format. Simultaneously, the computer outputs a trigger pulse via digital output lines 15 to inform the video tape recorder a new frame of video can be recorded.

The above described process and apparatus form a two synchronized channels (stereo) audio to video converter.

Moving the data compression process from the analog to the digital method in the above process allows all the analog circuits in the above process to be linear circuits. Linear analog circuits are a lot easier to test and calibrate than non-linear analog circuits.

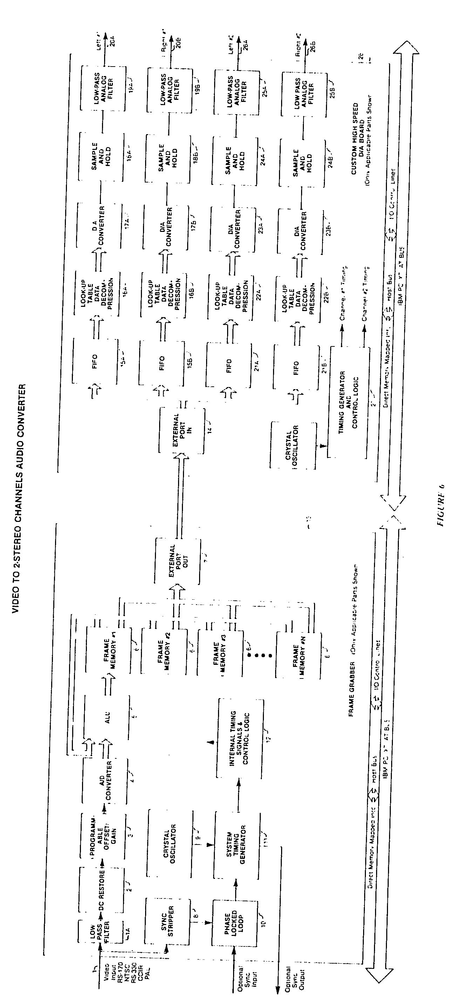

Referring to Figure 6, the video signal 1 is fed into a low-pass anti-aliasing filter 1A. The output of the anti-aliasing filer is fed into circuit that restores the DC level 2 of the video signal. Output of DC restore circuit is fed into programmable offset/gain circuit 3. This circuit conditions the video signal to make optimum use of analog-to-digital (A/D) converter 4. Output of the A/D converter is fed into any one of the frame grabber's on-board memories 6. Also, the output of the frame memories can be fed back into the arithmetic logic unit (ALU). Using this circuit, frame averaging can be carried out to increase the signal to noise (S/N) ratio. The same frame is digitized a number of times, the frames are added together at video frame rates (1/30 of second) and divided in one frame time. Since the noise in each incoming frame is randomly distributed, an averaged frame of many inputs of the same frame will produce an output frame with higher S/N ratio. The increased S/N ratio gives higher quality audio outputs from this circuit. The processing equipment preferred can process frames at 120 times normal playback speed, so even at a duplication speed of 16 times normal playback speed there is time for multiple digitizing of each frame. This time-domain signal cleaning has been applied in medical imaging but has not previously been applied in audio conversion processes.

Frame memories are then read out via the External Port Out 7 into the External Port In 14 on the Custom High Speed D/A Board 28. This transfer is done asynchronously and is at much higher speeds than is possible via the processor bus. Alternatively, the transfer can be carried out via the processor bus since both the frame grabber and the Custom High Speed D/A boards are directly memory mapped in to the processor's memory space.

Output of the External Port In is fed into the appropriate high speed First-In-First-Out (FIFO) memories 15A,

7

15B, 21A and 21B. Frame data is fed into the FIFO memories in burst mode. The FIFO memories are then read out at constant crystal controlled frequency to avoid having any wow or flutter in the output audio signal. Output of the FIFO memories is fed into output look-up tables 16A, 16B, 22A, and 22B that decompress the 8-bit values to 16-bit values via a proprietary non-linear decompression formula. Output of the look-up table is fed into digital-to-analog (D/A) converters 17A, 17B, 23A, and 23B that convert the digital values into analog signals. The outputs of D/A converters are fed into sample and hold amplifiers 18A, 18B, 24A and 24B to remove glitches from the D/A converter outputs.

Conventional D/A converters produce glitches: pulses of short duration (hundreds of nano-seconds) but high energy (tens to hundreds of least significant bits) caused by charge imbalances in the converter's data switches. Glitches can significantly reduce the effective accuracy of the converter. Since glitches occur when new data is written to the D/A converter, the D/A converter output is disconnected whenever a new value is written. After the glitch has passed and the D/A output stable, the D/A converter's output is re-connected to the board's output connection.

Outputs of the sample and hold amplifiers are fed into low-pass analog filters 19A, 19B, 25A, and 25B to filter out the high frequency signal components and to smooth out the analog signals. The forward track left audio channel output comes out on wiring 20A and the right audio channel output comes out on wiring 20B. The reverse track left audio channel output comes out on wiring 26A and the right channel output on wiring 26B.

The timing generator and control logic 27 control the complete process on the Custom High Speed D/A Board, which in turn is controlled by the computer.

The above process and apparatus forms a video to two-stereo channel audio converter.

The following specifications for high quality audio are suggested:

Sampling Frequency: 30KHz
Quantization: 8-bits/non-linear
Frequency: 20-12,000 Hz
Dynamic Range: 84 dB

Each video frame consists of 512 X 480 X 8-bits. Only 480 of the 512 horizontal lines will be encoded in the currently preferred embodiment, leaving room for later addition of digital data, gain, and offset coding. Using 480 lines, there would be 512 x 480 x 8-bits, i.e. 245,760 8-bit usable sample spaces per frame. At a sampling frequency of 30KHz there are 30,000 samples per second per audio channel. Therefore, for two audio channels there are (2 X 30,000 =) 60,000 samples per seconds. At 60,000 samples per second there can be stored 4 seconds of two channel audio per video frame (i.e., 4 X 60,000 = 240,000 samples per frame), leaving 5760 sample spaces free per frame (245,760 samples per frame less 240,000 samples per frame). The free sample space can be used for digital encoding information about the song recorded on that frame or for error correction information. 245,760 samples is equivalent to 480 horizontal scan lines. 240,000 samples would use up 470 horizontal scan lines leaving 10 horizontal scan lines that would be encoded with digital data. The use of this space can be completely defined if necessary with further information. The continuous bandwidth (CB) of this encoding is

$$CB = \frac{470 \ 1/f \ * \ 4 \ sec./f \ * \ 30 \ f/sec. \ * \ 12KHz/chan. \ * \ 2 \ chan.}{525 \ 1/f}$$

(f = frames)
(l = lines)
Two synchronized audio channel encoded with the above specification would occupy a bandwidth of 2.6 MHz.

The usable video signal bandwidth (UBW) is

$$UBW = \frac{470 \ 1/f \ * \ 4.5 \ MHz \ * \ 52.26 \ usec./l}{525 \ 1/f \ * \ 63.49 \ usec./l} = 3.3 \ MHz$$

(l = lines)
(f = frames)
The two synchronized audio channel require 2.6 MHz bandwidth and the available bandwidth is 3.3 MHz.

8

A CAV video disk can store 54,000 randomly accessible video frames. With 4 seconds of audio per frame that gives a capacity of (54,000 X 4) 216,000 seconds or 60 hours of high quality stereo audio per video disk. (The tape duplicating machine's frequency response at 16 times normal speed is 10 KHz and at 8 times normal speed is 12 KHz.)

At 8 X normal audio frequency the D/A converters on each channel would have to operate at 240 KHz (outputs per second).

At 16 X normal audio frequency the D/A converters on each channel would have to operate at 480 KHz.

The following are suggested specifications for ultra-high quality audio:

Sampling frequency: 48 KHz
Quantization: 8-bits/non-linear
Frequency: 20-15,000 Hz
Dynamic Range: 84dB

Each frame consists of 512 x 480 X 8-Bits = 245,760 sample spaces.

At a sampling frequency of 48KHz there are 48,000 samples per second per audio channel. For two channels there would be 96,000 samples per second. Therefore, there could be stored 2.5 seconds of two channel audio per video frame. 245,760 - (96,000 * 2.5) = 5760 sample spaces free per frame. At this sampling frequency we would use up 470 horizontal scan lines for audio information storage and leave 10 horizontal scan lines for digital data encoding. Digital information, gain, offset, or error correction code could be added to the remaining 23 horizontal scan lines of the 503 usable horizontal scan lines per frame.

The continuous bandwidth for this encoding is

$$CB = \frac{4701/f \; * \; 2.5sec/f \; * \; 30f/sec \; * \; *15KHz/chan. \; * \; 2 \; chan.}{525 \; 1/f}$$

(l = lines)
(f = frames)

Two synchronized channels with the above encoding occupy a bandwidth of 2.0 MHz.

The usable bandwidth of the video signal with this encoding is 3.3 MHz.

A CAV video disk has 54,000 randomly accessible video frames per disk. Encoding at 2.5 seconds per frame gives us 54,000 X 2.5 seconds or 36 hours ultra-high quality stereo audio per video disk.

At 8 X normal audio frequency each of the D/A converters would have to operate at 385 KHz. At 16 X normal audio frequency each of the D/A converters would have to operate at 768 KHz.

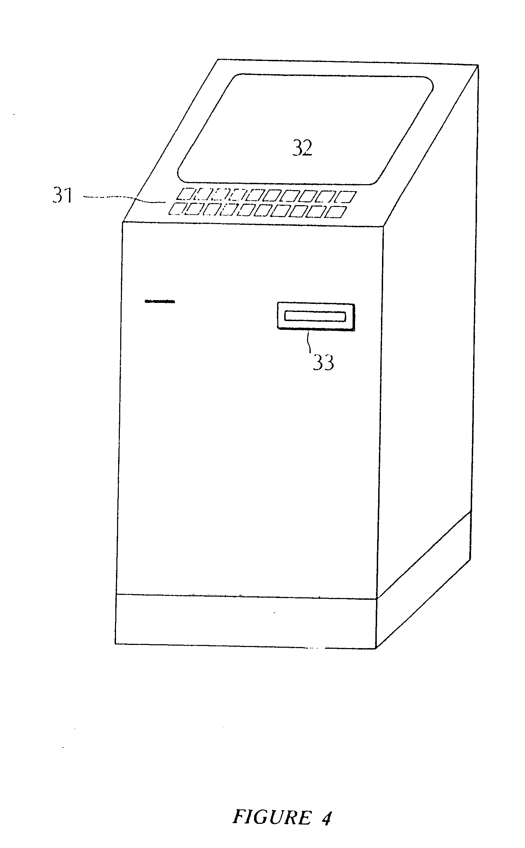

Referring to Figure 4, the various components of the invention are arranged in a single piece of furniture, suitable for placement and use by the customers in a retail location. A keyboard 31 accepts input from the customer, who operates it in accordance with the instructions and feedback presented to him on screen 32. Alternatively, the input device could be a touch-sensitive screen, a mouse, or a light pen, and the output device could be a display panel, a printer, or a speaker. The customer's completed tape is presented to him by the dispenser 33. Labelling or packaging machinery could easily be incorporated into the apparatus in order to identify the tape and its contents. The store operator could collect the amount due or alternatively, vending machine capabilities could be built into the apparatus. It could be enhanced to accept credit/debit cards. The entire apparatus could be built into a counter-top size or a free-standing floor model. The high-speed duplication capabilities of the system will enable the copying to be completed often in less time than it takes the customer to select the contents of the tape. The system could optionally display advertisements on the screen or play samples of the selections available.

The within-described invention may be embodied in other specific forms and with additional options and accessories without departing from the spirit or essential characteristics thereof. The presently disclosed embodiment is therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. High-speed data copying apparatus characterised by data storage means containing a library of stored data items, data access means (13) for accessing selected data items from the data storage means, and copying means (16) for copying the selected data items onto a sequential-storage medium.

2. Apparatus as claimed in Claim 1 in which the data storage means is digital, the apparatus further including digital to analog conversion means arranged to convert the selected data items into analog form prior to copying.

3. Apparatus as claimed in Claim 2 in which the signal to noise ratio in the copied data is increased by averaging a plurality of data items in the library for each recorded data item.

4. Apparatus as claimed in Claim 2 or Claim 3 in which the data access means (13) feeds the selected data items in burst mode to a rate buffer, the output of the rate buffer being fed to the copying means (16).

5. Apparatus as claimed in any one of Claims 2 to 4 in which the conversion means is disconnected momentarily whenever a new value is written to provide an analog signal substantially without noise glitches.

6. Apparatus as claimed in any one of the preceding claims in which the data items are stored in the data storage means in compressed form, the apparatus further including data expansion means (16A, 16B, 22A, 22B) arranged to expand the selected data items prior to copying.

7. Apparatus as claimed in any one of the preceding claims in which the data items are stored in video format.

8. Apparatus as claimed in Claim 7 in which the data storage means comprises a video disk.

9. Apparatus as claimed in Claim 7 or Claim 8 in which the data items comprise audio information stored as at least two synchronised channels on each video frame.

10. Apparatus as claimed in any one of the preceding claims arranged to copy onto auto cassette tape.

11. Apparatus as claimed in any one of the preceding claims including a communications link for automatic forwarding of information relating to the selected data items, for example for royalty purposes.

12. Apparatus as claimed in any one of the preceding claims including means (33) for dispensing a finished sequential-storage medium with the selected data items copied thereto, and means for receiving payment for the medium.

13. Apparatus as claimed in Claim 12 including labelling means (22) and packaging means for the said finished medium.

HI-FI AUDIO TAPE PLAYER

2-SYNCHRONIZED AUDIO CHANNELS

VIDEO TAPE RECORDER

COMPUTER

*FIGURE 1*

EP 0 309 298 A2

VIDEO DISK PLAYER

VIDEO TO 2-STEREO CHANNELS (i.e. 4-Channels) AUDIO CONVERTER

14

HIGH SPEED STEREO AUDIO CASSETTE RECORDER

12

13

15

16

11

COMPUTER

1

*FIGURE 2*

EP 0 309 298 A2

VIDEO DISK
PLAYER

12

21

COMPUTER

1

25

24

HIGH SPEED AUDIO
CASSETTE RECORDER

14

15

SYSTEM PRINTER

22

FIGURE 3

EP 0 309 298 A2

31

32

33

FIGURE 4

TWO SYNCHRONIZED CHANNEL AUDIO TO VIDEO CONVERTER

FIGURE 5

EP 0 309 298 A2

VIDEO TO 2-STEREO CHANNELS AUDIO CONVERTER

LOW PASS FILTER — DC RESTORE — PROGRAMMABLE OFFSET/GAIN — A/D CONVERTER — ALU — FRAME MEMORY #1

SYNC STRIPPER   CRYSTAL OSCILLATOR

PHASE LOCKED LOOP — SYSTEM TIMING GENERATOR — INTERNAL TIMING SIGNALS & CONTROL LOGIC

FRAME MEMORY #2
FRAME MEMORY #3
FRAME MEMORY #N

EXTERNAL PORT OUT

EXTERNAL PORT IN

Video Input RS-170 NTSC RS-330 CCIR PAL

Optional Sync Input

Optional Sync Output

FIFO — LOOK-UP TABLE DATA DECOMPRESSION — D/A CONVERTER — SAMPLE AND HOLD — LOW-PASS ANALOG FILTER — Left #1

FIFO — LOOK-UP TABLE DATA DECOMPRESSION — D/A CONVERTER — SAMPLE AND HOLD — LOW-PASS ANALOG FILTER — Right #1

FIFO — LOOK-UP TABLE DATA DECOMPRESSION — D/A CONVERTER — SAMPLE AND HOLD — LOW-PASS ANALOG FILTER — Left #2

CRYSTAL OSCILLATOR — FIFO — LOOK-UP TABLE DATA DECOMPRESSION — D/A CONVERTER — SAMPLE AND HOLD — LOW PASS ANALOG FILTER — Right #2

TIMING GENERATOR AND CONTROL LOGIC
Channel #1 Timing
Channel #2 Timing

FRAME GRABBER   (Only Applicable Parts Shown)

CUSTOM HIGH SPEED D/A BOARD (Only Applicable Parts Shown)

Direct Memory Mapped into Host Bus     I/O Control Lines
IBM PC XT AT BUS

Direct Memory Mapped into Host Bus     I/O Control Lines
IBM PC XT AT BUS

FIGURE 6

EP 0 309 298 A2